# EUROPEAN PATENT APPLICATION

(11) **EP 4 826 825 A1**
(43) Date of publication of application: **21.10.2026**
(21) Application number: 24902331.8
(22) Date of filing: 12.10.2024
(51) Int. Cl.: H01M 10/0567, H01M 10/052, H01M 10/0525

(54) **NON-AQUEOUS ELECTROLYTE AND LITHIUM-ION BATTERY**

(30) Priority: 12.12.2023 CN 202311698791
(71) Applicant: Zhangjiagang Guotai-Huarong New Chemical Materials Co., Ltd, Suzhou, Jiangsu 215600 (CN)
(72) Inventor: CHEN, Xiaoqin, Suzhou, Jiangsu 215600 (CN); TU, Linjie, Suzhou, Jiangsu 215600 (CN); ZHANG, Yin, Suzhou, Jiangsu 215600 (CN); GAN, Chaolun, Suzhou, Jiangsu 215600 (CN)
(74) Representative: Bryers Intellectual Property Ltd
(86) International application number: PCT/CN2024/124441
(87) International publication number: WO 2025/123905

(57) **Abstract**

A non-aqueous electrolyte and a lithium-ion battery. The non-aqueous electrolyte comprises a lithium salt, an organic solvent, and an Additive A and Additive B, wherein the structural formula of Additive A is as shown in (I), wherein R₁ is selected from alkylene, fluoroalkylene, alkenylene, or fluoroalkenylene, and R₂ is selected from fluoroalkyl or fluoroalkenyl; and the Additive B is a boron-containing lithium salt. By compounding the additive A and the boron-containing lithium salt additive, the cycle performance, high-temperature performance and rate capability of a lithium-ion battery are improved; and by means of further combination with other components in the non-aqueous electrolyte, the high-temperature performance and cycle performance of the lithium-ion battery at a conventional voltage are ensured, and moreover when the voltage is increased to 4.5 V or even higher, the lithium-ion battery still has better high-temperature performance and cycle performance, and also has better safety performance and electrochemical performance.

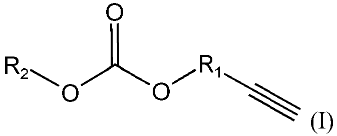

## Description

### Technical Field of the Invention

The present invention relates to the field of battery technology, and in particular to a non-aqueous electrolyte and a lithium-ion battery.

### Background of the Invention

With the emergence of new consumer electronics applications such as mobile phones, tablet computers, smart wearables, and ETC devices, lithium-ion batteries have demonstrated great advantages owing to their high energy density and long cycle life. Sulfonyl compounds are commonly used in electrolyte applications in the form of small organic molecules as solvent additives for non-aqueous electrolytes of lithium-ion batteries, utilizing the electrode film-forming properties of sulfonyl groups to form stable SEI films/protective films on electrode surfaces, thereby suppressing gas generation and improving high-temperature storage performance, cycle performance, and life characteristics of batteries. In electrolytes, lithium salts containing sulfonyl groups are also widely used, especially sulfonylimide salts. Under the EU REACH regulation, for SVHC substances contained in articles, if the substance accounts for more than 0.1% by mass of the article and the total quantity of articles produced or imported reaches 1 ton/year or more, the producer or importer of the article must notify the European Chemicals Agency (ECHA) of the SVHC. Within 6 months of a substance being added to the REACH authorization candidate list (i.e., the SVHC list), enterprises must submit an ECHA notification document. PS was added to the SVHC (Substances of Very High Concern) list on December 17, 2015; it is a hazardous substance that, while not on the restriction and authorization lists, has been included in the authorization candidate list (meaning it may be formally added to the authorization list in the future). If it is formally added to the authorization list in the future, importers will need to obtain authorization for its use; if authorization is denied, the substance will be banned. As the SVHC list continues to expand, many sulfur-containing compounds may be restricted in the future. Therefore, it is necessary to develop a sulfur-free electrolyte with good high-temperature and cycle performance.

In previous research, a sulfur-free non-aqueous electrolyte and lithium battery with excellent cycle performance and high-temperature storage performance were developed, as detailed in patent CN112510259B. However, as research deepened, it was found that when the voltage of the lithium battery in that patent was gradually increased to 4.5 V and above, the high-temperature performance and cycle performance of the battery declined, and the safety performance decreased accordingly. To address the battery performance issues at high voltage, building on the research of that patent, an electrolyte and lithium battery that do not include sulfur-containing additives and that can improve the high-temperature performance and discharge performance of the battery at high voltage were developed, as detailed in patent CN116154281A. However, as research further deepened, it was found that the high-temperature performance and high-temperature cycle performance of the lithium battery involved in patent CN116154281A still need to be further improved.

### Summary of the Invention

The object of the present invention is to provide a non-aqueous electrolyte and a lithium-ion battery with better high-temperature performance, cycle performance, and rate performance.

To achieve the above object, the technical solution adopted by the present invention is as follows:
A non-aqueous electrolyte comprising a lithium salt, an organic solvent, and an additive, wherein the additive comprises Additive A and Additive B, the structural formula of Additive A is 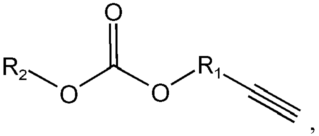 wherein R₁ is selected from alkylene, fluoroalkylene, alkenylene, or fluoroalkenylene, and R₂ is selected from fluoroalkyl or fluoroalkenyl;
Additive B is a boron-containing lithium salt.

Preferably, R₁ is selected from alkylene having 1 to 3 carbon atoms or fluoroalkylene having 1 to 3 carbon atoms.

More preferably, R₁ is selected from methylene (-CH₂-), ethylene (-CH₂CH₂-), or propylene (-CH₂CH₂CH₂- or -C(CH₃)₂-).

Preferably, R₂ is selected from fluoroalkyl having 1 to 3 carbon atoms.

More preferably, R₂ is selected from fluoroethyl (-CH₂CH₂F, -CHFCH₃), difluoroethyl (-CH₂CHF₂, -CHFCH₂F, -CF₂CH₃), or trifluoroethyl (-CH₂CF₃, -CF₃CH₃, -CF₂CH₂F, -CHFCHF₂).

In some embodiments, Additive A is one or more of trifluoroethyl propargyl carbonate, difluoroethyl propargyl carbonate, and fluoroethyl propargyl carbonate.

Preferably, Additive A accounts for 0.01% to 1% of the total mass of the non-aqueous electrolyte.

More preferably, Additive A accounts for 0.1% to 1% of the total mass of the non-aqueous electrolyte, for example 0.3%, 0.4%, 0.5%, 0.6%, 0.7%, 0.8%, 0.9%, or 1%.

Preferably, the boron-containing lithium salt of Additive B includes one or more of lithium difluoro(oxalato)borate, lithium tetrafluoroborate, lithium bis(oxalato)borate, lithium tetraborate, lithium triphenyl-n-butylborate, and lithium trimethylimidazolium tetrafluoroborate.

Preferably, Additive B accounts for 0.01% to 2% of the total mass of the non-aqueous electrolyte.

More preferably, Additive B accounts for 0.1% to 1% of the total mass of the non-aqueous electrolyte.

Still more preferably, Additive B accounts for 0.3% to 1% of the total mass of the non-aqueous electrolyte, for example 0.3%, 0.4%, 0.5%, 0.6%, 0.7%, 0.8%, 0.9%, or 1%.

Preferably, the additive further includes other additives, and the other additives are one or more of vinylene carbonate, vinyl ethylene carbonate, tris(trimethylsilyl) borate, tris(trimethylsilyl) phosphate, citraconic anhydride, succinic anhydride, biphenyl, cyclohexylbenzene, trioctyl phosphate, fluoroethylene carbonate, succinonitrile, adiponitrile, 1,3,6-hexanetricarbonitrile, 1,2-bis(2-cyanoethoxy)ethane, 1,4-dicyano-2-butene, 1,2,3-tris(2-cyanoethoxy)propane, and sebaconitrile.

Preferably, the other additives account for 2% to 15% of the total mass of the non-aqueous electrolyte.

More preferably, the other additives account for 2% to 10% of the total mass of the non-aqueous electrolyte, for example 2%, 3%, 4%, 5%, 6%, 7%, 8%, 9%, or 10%.

In certain embodiments, the other additives comprise succinonitrile accounting for 1% to 3% of the total mass of the non-aqueous electrolyte, fluoroethylene carbonate accounting for 4% to 8% of the total mass of the non-aqueous electrolyte, and 1,3,6-hexanetricarbonitrile accounting for 2% to 4% of the total mass of the non-aqueous electrolyte.

Preferably, the organic solvent is a mixture of cyclic esters and chain esters.

More preferably, the cyclic ester is one or more of γ-butyrolactone, ethylene carbonate, propylene carbonate, and fluoroethylene carbonate.

More preferably, the chain ester is one or more of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, ethyl fluoropropionate, and ethyl fluoroacetate.

In some embodiments, the organic solvent is a mixture of dimethyl carbonate, ethylene carbonate, and ethyl methyl carbonate.

In some embodiments, the organic solvent is a mixture of ethylene carbonate, propylene carbonate, ethyl propionate, and propyl propionate.

In some embodiments, the organic solvent is a mixture of diethyl carbonate, ethylene carbonate, propylene carbonate, ethyl propionate, and propyl propionate.

Preferably, the lithium salt is one or more of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalato)phosphate, lithium difluorophosphate, lithium trifluoromethanesulfonate, lithium difluorobis(oxalato)phosphate, lithium difluorobis(oxalato)phosphate, lithium fluorosulfonate, lithium monoxalatodifluoroborate, and lithium bis(fluorosulfonyl)imide.

Preferably, the concentration of the lithium salt is 0.8 to 1.5 mol/L.

More preferably, the concentration of the lithium salt is 1 to 1.3 mol/L, for example 1 mol/L, 1.1 mol/L, 1.2 mol/L, or 1.3 mol/L.

The present invention further provides a lithium-ion battery comprising the non-aqueous electrolyte described above.

Further, the lithium-ion battery is a lithium cobaltate-graphite battery or a lithium cobaltate-silicon oxycarbon battery.

Preferably, the lithium-ion battery is a lithium cobaltate-graphite battery of 4.2 V or above, or a lithium cobaltate-silicon oxycarbon battery of 4.5 V or above.

By virtue of the above technical solution, the present invention has the following advantages over the prior art:
By combining Additive A with the boron-containing lithium salt Additive B, the present invention improves the cycle performance, high-temperature performance, and rate performance of lithium-ion batteries. By further combining with other components of the non-aqueous electrolyte, while ensuring the high-temperature performance and cycle performance of lithium-ion batteries at conventional voltages, the lithium-ion batteries still exhibit superior high-temperature performance, cycle performance, safety performance, and electrochemical performance when the voltage is increased to 4.5 V or even higher.

### Detailed Description of Exemplary Embodiments

The present invention is further described below in conjunction with examples. However, the present invention is not limited to the following examples. The implementation conditions used in the examples may be further adjusted according to specific different requirements; implementation conditions not specified are conventional conditions in the industry. The technical features involved in the various embodiments of the present invention may be combined with each other as long as they do not constitute a conflict with each other.

Unless otherwise specified, the raw materials referred to in the following examples and comparative examples are all commercially available products.

Unless otherwise specified, "wt%" in the present invention refers to mass percentage.

The raw materials referred to in the following examples and comparative examples include: dimethyl carbonate (DMC), ethylene carbonate (EC), ethyl methyl carbonate (EMC), lithium hexafluorophosphate (LiPF₆), propylene carbonate (PC), ethyl propionate (EP), propyl propionate (PP), diethyl carbonate (DEC), trifluoroethyl propargyl carbonate (CAS No.: 2361539-53-7), difluoroethyl propargyl carbonate (CAS No.: 2244079-46-5), fluoroethyl propargyl carbonate (CAS No.: 929294-69-9), propargyl acetate (CAS No.: 627-09-8), and dipropargyl carbonate (CAS No.: 79493-91-7).

### Example 1

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.1 wt% of trifluoroethyl propargyl carbonate and 0.3 wt% of lithium difluoro(oxalato)borate were added to the electrolyte respectively.

### Example 2

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.3 wt% of trifluoroethyl propargyl carbonate and 0.3 wt% of lithium difluoro(oxalato)borate were added to the electrolyte respectively.

### Example 3

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of trifluoroethyl propargyl carbonate and 0.3 wt% of lithium difluoro(oxalato)borate were added to the electrolyte respectively.

### Example 4

In an argon-filled glove box (H₂O content <10 ppm), DMC, EC, and EMC were mixed uniformly at a volume ratio of 2:1:6, 1.0 mol/L of LiPF₆ was added to the mixed solution, and then 1 wt% of trifluoroethyl propargyl carbonate and 0.3 wt% of lithium difluoro(oxalato)borate were added to the electrolyte respectively.

### Example 5

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of difluoroethyl propargyl carbonate and 0.3 wt% of lithium difluoro(oxalato)borate were added to the electrolyte respectively.

### Example 6

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of fluoroethyl propargyl carbonate and 0.3 wt% of lithium difluoro(oxalato)borate were added to the electrolyte respectively.

### Example 7

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of fluoroethyl propargyl carbonate and 0.1 wt% of lithium difluoro(oxalato)borate were added to the electrolyte respectively.

### Example 8

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of fluoroethyl propargyl carbonate and 0.5 wt% of lithium difluoro(oxalato)borate were added to the electrolyte respectively.

### Example 9

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of fluoroethyl propargyl carbonate and 1 wt% of lithium difluoro(oxalato)borate were added to the electrolyte respectively.

### Example 10

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, 0.5 wt% of trifluoroethyl propargyl carbonate, and 0.5 wt% of lithium difluoro(oxalato)borate were added to the electrolyte respectively to prepare the electrolyte.

### Example 11

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, 0.5 wt% of difluoroethyl propargyl carbonate, and 0.5 wt% of lithium difluoro(oxalato)borate were added to the electrolyte respectively to prepare the electrolyte.

### Example 12

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, 0.5 wt% of fluoroethyl propargyl carbonate, and 0.5 wt% of lithium difluoro(oxalato)borate were added to the electrolyte respectively to prepare the electrolyte.

### Example 13

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of trifluoroethyl propargyl carbonate, and 0.5 wt% of lithium difluoro(oxalato)borate were added to the electrolyte respectively to prepare the electrolyte.

### Example 14

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of difluoroethyl propargyl carbonate, and 0.5 wt% of lithium difluoro(oxalato)borate were added to the electrolyte respectively to prepare the electrolyte.

### Example 15

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of fluoroethyl propargyl carbonate, and 0.5 wt% of lithium difluoro(oxalato)borate were added to the electrolyte respectively to prepare the electrolyte.

### Example 16

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of fluoroethyl propargyl carbonate, and 0.5 wt% of lithium tetrafluoroborate were added to the electrolyte respectively to prepare the electrolyte.

### Example 17

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of fluoroethyl propargyl carbonate, and 0.5 wt% of lithium bis(oxalato)borate were added to the electrolyte respectively to prepare the electrolyte.

### Example 18

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of fluoroethyl propargyl carbonate, and 0.5 wt% of lithium triphenyl-n-butylborate were added to the electrolyte respectively to prepare the electrolyte.

### Comparative Example 1

In an argon-filled glove box (H₂O content <10 ppm), DMC, EC, and EMC were mixed uniformly at a volume ratio of 2:1:6, and 1.0 mol/L of LiPF₆ was added to the mixed solution to prepare the electrolyte.

### Comparative Example 2

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of trifluoroethyl propargyl carbonate was added to the electrolyte.

### Comparative Example 3

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.3 wt% of lithium difluoro(oxalato)borate was added to the electrolyte.

### Comparative Example 4

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of propargyl acetate was added to the electrolyte respectively.

### Comparative Example 5

In an argon-filled glove box (H₂O content <10 ppm), DMC, EC, and EMC were mixed uniformly at a volume ratio of 2:1:6, 1.0 mol/L of LiPF₆ was added to the mixed solution, and then 0.5 wt% of dipropargyl carbonate was added to the electrolyte respectively.

### Comparative Example 6

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, and 0.5 wt% of lithium difluoro(oxalato)borate were added to the electrolyte respectively to prepare the electrolyte.

### Comparative Example 7

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, and 0.5 wt% of trifluoroethyl propargyl carbonate were added to the electrolyte respectively to prepare the electrolyte.

### Comparative Example 8

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, 0.5 wt% of propargyl acetate, and 0.5 wt% of lithium difluoro(oxalato)borate were added to the electrolyte respectively to prepare the electrolyte.

### Comparative Example 9

In an argon-filled glove box (H₂O content <10 ppm), EC, PC, EP, and PP were mixed uniformly at a volume ratio of 2:1:3:4, 1.2 mol/L of LiPF₆ was added to the mixed solution, and then 2 wt% of succinonitrile, 4 wt% of fluoroethylene carbonate, 3 wt% of 1,3,6-hexanetricarbonitrile, 0.5 wt% of dipropargyl carbonate, and 0.5 wt% of lithium difluoro(oxalato)borate were added to the electrolyte respectively to prepare the electrolyte.

### Comparative Example 10

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, and 0.5 wt% of lithium difluoro(oxalato)borate were added to the electrolyte respectively to prepare the electrolyte.

### Comparative Example 11

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, and 0.5% of trifluoroethyl propargyl carbonate were added to the electrolyte respectively to prepare the electrolyte.

### Comparative Example 12

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of propargyl acetate, and 0.5 wt% of lithium difluoro(oxalato)borate were added to the electrolyte respectively to prepare the electrolyte.

### Comparative Example 13

In an argon-filled glove box (H₂O content <10 ppm), DEC, EC, PC, EP, and PP were mixed uniformly at a volume ratio of 1:2:1:3:3, 1.2 mol/L of LiPF₆ was added to the mixed solution, and then 2 wt% of succinonitrile, 8 wt% of fluoroethylene carbonate, 3 wt% of 1,3,6-hexanetricarbonitrile, 0.5 wt% of dipropargyl carbonate, and 0.5 wt% of lithium difluoro(oxalato)borate were added to the electrolyte respectively to prepare the electrolyte.

### Performance Testing

1. The electrolytes prepared in Examples 1 to 9 and Comparative Examples 1 to 5 were respectively injected into 4.2 V lithium cobaltate-graphite batteries. The preparation method of the 4.2 V lithium cobaltate-graphite battery is as follows:
   Cathode: lithium cobaltate (LCO)/conductive graphite/binder PVDF were mixed into a slurry at a ratio of 93.5%/3.5%/3% and coated to prepare cathode sheets for use;
   Anode: artificial graphite/conductive graphite/binder SBR (styrene-butadiene rubber)/thickener CMC (carboxymethyl cellulose) were mixed into a slurry at a ratio of 95.5%/1%/2%/1.5% and coated to prepare anode sheets for use;

The cathode sheets were calendered to a compaction density of 2.50 g/cm³, and the anode sheets were calendered to a compaction density of 1.65 g/cm³. After slitting and welding tabs, the sheets were wound into bare cells on a semi-automatic winding machine and encapsulated with aluminum-plastic film to prepare AHB083048 type cells for use.

The capacity retention rate and battery swelling rate of each of the above batteries after storage at 85°C for 4 hours were tested. The testing method is as follows: the batteries were charged to 4.2 V at 1C under constant current/constant voltage (CC/CV) conditions at 25°C, then stored in an oven at 85°C for 4 hours; after storage, the batteries were discharged at 1C to 3.0 V respectively, and the capacity and battery thickness after storage at 85°C for 4 hours were measured. The capacity retention rate of the above batteries after storage at 85°C for 4 hours equals the capacity after storage at 85°C for 4 hours divided by the capacity charged and discharged under the same conditions without high-temperature storage; the battery swelling rate of the above batteries after storage at 85°C for 4 hours equals the difference between the battery thickness after storage and the battery thickness before storage divided by the battery thickness before storage. The 45°C 1000-cycle capacity retention rate and the DCR at 50% SCO, 2C for 10 s were tested for each of the above batteries. The testing method for the 45°C 1000-cycle capacity retention rate is: under constant current/constant voltage (CC/CV) conditions at 45°C, the batteries were charged to 4.2 V at 1C and then discharged to 3.0 V at 1C; the battery capacity after the first charge-discharge and the battery capacity after 1000 charge-discharge cycles were tested respectively; the 45°C 1000-cycle capacity retention rate equals the battery capacity after 1000 charge-discharge cycles divided by the battery capacity after the first charge-discharge. The testing method for the DCR at 50% SCO, 2C for 10 s is: the ratio of the voltage difference to the current during 2C constant-current discharge for 10 s at 50% SCO state of charge. The relevant experimental data are shown in Table 1.

**Table 1**

| | Capacity Retention Rate after Storage at 85°C for 4 h (%) | Battery Swelling Rate after Storage at 85°C for 4 h (%) | Capacity Retention Rate after 1000 Cycles at 45°C (%) | DCR (mΩ) |
|---|---|---|---|---|
| Example 1 | 88.3 | 9.7 | 87.9 | 15.3 |
| Example 2 | 89.1 | 9.4 | 88.2 | 14.2 |
| Example 3 | 89.7 | 8.9 | 89.8 | 13.5 |
| Example 4 | 88.5 | 9.2 | 89.6 | 15.2 |
| Example 5 | 88.9 | 8.5 | 90.2 | 14.9 |
| Example 6 | 89.2 | 8.3 | 90.5 | 14.4 |
| Example 7 | 88.0 | 10.5 | 89.7 | 14.2 |
| Example 8 | 91.7 | 8.2 | 91.5 | 14.6 |
| Example 9 | 91.2 | 8.9 | 91.0 | 16.8 |
| Comparative Example 1 | 86.7 | 10.9 | 85.6 | 17.8 |
| Comparative Example 2 | 88.8 | 11.6 | 88.9 | 19.6 |
| Comparative Example 3 | 90.2 | 11.4 | 89.4 | 18.8 |
| Comparative Example 4 | 87.5 | 11.5 | 87.4 | 16.4 |
| Comparative Example 5 | 87.2 | 12.5 | 87.0 | 18.7 |

As can be seen from Table 1, the use of Additive A or Additive B alone, while helpful in improving the battery's high-temperature capacity retention rate and high-temperature cycle performance, increases the battery's high-temperature swelling rate and DCR. Unexpectedly, the inventors found that by combining Additive A with Additive B, while improving the battery's high-temperature capacity retention rate and high-temperature cycle performance, the battery's high-temperature swelling and internal resistance can also be reduced.

Further comparison of Examples 1 to 4 reveals that as the content of Additive A in the electrolyte increases, the improvement effect on battery performance increases; however, as the content of Additive A further increases, the improvement effect on battery performance decreases somewhat. Therefore, Additive A preferably accounts for 0.1% to 1% of the total mass of the electrolyte.

Further comparison of Examples 6 to 9 reveals that as the content of Additive B in the electrolyte increases, the improvement effect on battery performance increases; however, as the content of Additive B further increases, the improvement effect on battery performance decreases somewhat, especially for the battery's internal resistance. Therefore, Additive B preferably accounts for 0.1% to 1% of the total mass of the electrolyte.

2. The electrolytes prepared in Examples 10 to 12 and Comparative Examples 6 to 9 were respectively injected into 4.52 V lithium cobaltate-graphite batteries. The preparation method of the 4.52 V lithium cobaltate-graphite battery is as follows:
Cathode: lithium cobaltate (LCO)/conductive graphite/binder PVDF were mixed into a slurry at a ratio of 93.5%/3.5%/3% and coated to prepare cathode sheets for use;
Anode: artificial graphite/conductive graphite/binder SBR (styrene-butadiene rubber)/thickener CMC (carboxymethyl cellulose) were mixed into a slurry at a ratio of 95.5%/1%/2%/1.5% and coated to prepare anode sheets for use;

The cathode sheets were calendered to a compaction density of 2.50 g/cm³, and the anode sheets were calendered to a compaction density of 1.65 g/cm³. After slitting and welding tabs, the sheets were wound into bare cells on a semi-automatic winding machine and encapsulated with aluminum-plastic film to prepare AHB083048 type cells for use.

The capacity retention rate and battery swelling rate of each of the above batteries after storage at 85°C for 4 hours were tested. The testing method is as follows: the batteries were charged to 4.52 V at 1C under constant current/constant voltage (CC/CV) conditions at 25°C, then stored in an oven at 85°C for 4 hours; after storage, the batteries were discharged at 1C to 3.0 V respectively, and the capacity and battery thickness after storage at 85°C for 4 hours were measured. The capacity retention rate of the above batteries after storage at 85°C for 4 hours equals the capacity after storage at 85°C for 4 hours divided by the capacity charged and discharged under the same conditions without high-temperature storage; the battery swelling rate of the above batteries after storage at 85°C for 4 hours equals the difference between the battery thickness after storage and the battery thickness before storage divided by the battery thickness before storage. The 45°C 200-cycle capacity retention rate and the DCR at 50% SCO, 2C for 10 s were tested for each of the above batteries. The testing method for the 45°C 200-cycle capacity retention rate is: under constant current/constant voltage (CC/CV) conditions at 45°C, the batteries were charged to 4.52 V at 1C and then discharged to 3.0 V at 1C; the battery capacity after the first charge-discharge and the battery capacity after 200 charge-discharge cycles were tested respectively; the 45°C 200-cycle capacity retention rate equals the battery capacity after 200 charge-discharge cycles divided by the battery capacity after the first charge-discharge. The testing method for the DCR at 50% SCO, 2C for 10 s is: the ratio of the voltage difference to the current during 2C constant-current discharge for 10 S at 50% SCO state of charge. The relevant experimental data are shown in Table 2.

**Table 2**

| | Capacity Retention Rate after Storage at 85°C for 4 h (%) | Battery Swelling Rate after Storage at 85°C for 4 h (%) | Capacity Retention Rate after 200 Cycles at 45°C (%) | DCR (mΩ) |
|---|---|---|---|---|
| Example 10 | 90.2 | 10.0 | 91.8 | 20.7 |
| Example 11 | 89.3 | 10.9 | 90.9 | 21.9 |
| Example 12 | 88.9 | 10.5 | 91.2 | 21.5 |
| Comparative Example 6 | 87.3 | 13.2 | 86.9 | 26.7 |
| Comparative Example 7 | 86.5 | 14.1 | 85.7 | 25.9 |
| Comparative Example 8 | 85.1 | 15.8 | 82.3 | 29.5 |
| Comparative Example 9 | 88.7 | 14.5 | 89.2 | 27.8 |

As can be seen from Table 2, even at a higher voltage (4.52 V), batteries containing Additives A and B still exhibit higher high-temperature performance, higher high-temperature cycle performance, and lower DCR.

Compared with adding either Additive A alone or Additive B alone to the electrolyte, the simultaneous addition of both provides better improvement in the battery's high-temperature capacity retention rate, high-temperature swelling rate, high-temperature cycle retention rate, and DCR.

Compared with the combination of propargyl acetate with Additive B or the combination of dipropargyl carbonate with Additive B, the combination of Additives A and B provides better results.

3. The electrolytes prepared in Examples 13 to 18 and Comparative Examples 10 to 13 were respectively injected into 4.5 V lithium cobaltate-silicon oxycarbon batteries. The preparation method of the 4.5 V lithium cobaltate-silicon oxycarbon battery is as follows:
Cathode: lithium cobaltate (LCO)/conductive graphite/binder PVDF were mixed into a slurry at a ratio of 93.5%/3.5%/3% and coated to prepare cathode sheets for use;
Anode: silicon oxycarbon/conductive graphite/binder SBR (styrene-butadiene rubber)/thickener CMC (carboxymethyl cellulose) were mixed into a slurry at a ratio of 95.5%/1%/2%/1.5% and coated to prepare anode sheets for use;

The cathode sheets were calendered to a compaction density of 2.50 g/cm³, and the anode sheets were calendered to a compaction density of 1.65 g/cm³. After slitting and welding tabs, the sheets were wound into bare cells on a semi-automatic winding machine and encapsulated with aluminum-plastic film to prepare AHB083048 type cells for use.

The capacity retention rate and battery swelling rate of each of the above batteries after storage at 85°C for 4 hours were tested. The testing method is as follows: the batteries were charged to 4.5 V at 1C under constant current/constant voltage (CC/CV) conditions at 25°C, then stored in an oven at 85°C for 4 hours; after storage, the batteries were discharged at 1C to 3.0 V respectively, and the capacity and battery thickness after storage at 85°C for 4 hours were measured. The capacity retention rate of the above batteries after storage at 85°C for 4 hours equals the capacity after storage at 85°C for 4 hours divided by the capacity charged and discharged under the same conditions without high-temperature storage; the battery swelling rate of the above batteries after storage at 85°C for 4 hours equals the difference between the battery thickness after storage and the battery thickness before storage divided by the battery thickness before storage. The 45°C 200-cycle capacity retention rate and the DCR at 50% SCO, 2C for 10 s were tested for each of the above batteries. The testing method for the 45°C 200-cycle capacity retention rate is: under constant current/constant voltage (CC/CV) conditions at 45°C, the batteries were charged to 4.5 V at 1C and then discharged to 3.0 V at 1C; the battery capacity after the first charge-discharge and the battery capacity after 200 charge-discharge cycles were tested respectively; the 45°C 200-cycle capacity retention rate equals the battery capacity after 200 charge-discharge cycles divided by the battery capacity after the first charge-discharge. The testing method for the DCR at 50% SCO, 2C for 10 s is: the ratio of the voltage difference to the current during 2C constant-current discharge for 10 S at 50% SCO state of charge. The relevant experimental data are shown in Table 3.

**Table 3**

| | Capacity Retention Rate after Storage at 85°C for 4 h (%) | Battery Swelling Rate after Storage at 85°C for 4 h (%) | Capacity Retention Rate after 200 Cycles at 45°C (%) | DCR (mΩ) |
|---|---|---|---|---|
| Example 13 | 87.6 | 20.3 | 84.2 | 32.5 |
| Example 14 | 86.3 | 21.2 | 83.5 | 33.4 |
| Example 15 | 85.7 | 20.5 | 83.7 | 32.9 |
| Example 16 | 85.4 | 19.8 | 83.5 | 31.5 |
| Example 17 | 85.5 | 20.4 | 84.1 | 33.4 |
| Example 18 | 84.9 | 21.0 | 83.1 | 33.9 |
| Comparative Example 10 | 79.8 | 24.2 | 79.5 | 40.2 |
| Comparative Example 11 | 78.5 | 23.5 | 77.9 | 38.6 |
| Comparative Example 12 | 82.5 | 26.5 | 80.7 | 44.3 |
| Comparative Example 13 | 83.2 | 25.9 | 82.1 | 43.5 |

As can be seen from Table 3, even at a higher voltage (4.5 V), batteries containing Additives A and B still exhibit higher high-temperature storage performance, higher high-temperature cycle performance, and lower DCR.

Compared with adding either Additive A alone or Additive B alone to the electrolyte, the simultaneous addition of both provides better improvement in the battery's high-temperature capacity retention rate, high-temperature swelling rate, high-temperature cycle retention rate, and DCR. Furthermore, compared with the combination of propargyl acetate with Additive B or the combination of dipropargyl carbonate with Additive B, the combination of Additives A and B provides better results.

Boron-containing lithium salts can improve the rate performance and cycle performance of lithium batteries; they can form a borate-containing passivating solid cathode electrolyte interphase (CEI) on the cathode surface. This CEI film not only prevents the electrolyte from leaching into the interface but also eliminates adverse reactions at the cathode-electrolyte interface, while promoting lithium-ion diffusion kinetics and improving rate performance. Moreover, by combining Additive A with the boron-containing lithium salt Additive B, the cycle performance, high-temperature performance, and rate performance of lithium-ion batteries are better improved. By further combining with other components of the non-aqueous electrolyte, while ensuring the high-temperature performance and cycle performance of lithium-ion batteries at conventional voltages, the lithium-ion batteries still exhibit superior high-temperature performance, cycle performance, safety performance, and electrochemical performance when the voltage is increased to 4.5 V or even higher.

The foregoing is a detailed description of the present invention, which is intended to enable persons skilled in the art to understand and practice the present invention, and should not be construed as limiting the scope of protection of the present invention. All equivalent changes or modifications made in accordance with the spirit of the present invention shall fall within the scope of protection of the present invention.

## Claims

1. A non-aqueous electrolyte comprising a lithium salt, an organic solvent, and an additive, wherein the additive comprises Additive A and Additive B, the structural formula of Additive A is 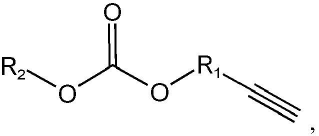 wherein R₁ is selected from alkylene, fluoroalkylene, alkenylene, or fluoroalkenylene, and R₂ is selected from fluoroalkyl or fluoroalkenyl;
Additive B is a boron-containing lithium salt.

2. The non-aqueous electrolyte according to claim 1, wherein R₁ is selected from alkylene having 1 to 3 carbon atoms or fluoroalkylene having 1 to 3 carbon atoms; and/or,
R₂ is selected from fluoroalkyl having 1 to 3 carbon atoms.

3. The non-aqueous electrolyte according to claim 2, wherein R₁ is selected from methylene, ethylene, or propylene; and/or,
R₂ is selected from fluoroethyl, difluoroethyl, or trifluoroethyl.

4. The non-aqueous electrolyte according to claim 3, wherein Additive A is one or more of trifluoroethyl propargyl carbonate, difluoroethyl propargyl carbonate, and fluoroethyl propargyl carbonate.

5. The non-aqueous electrolyte according to any one of claims 1 to 4, wherein Additive A accounts for 0.01% to 1% of the total mass of the non-aqueous electrolyte.

6. The non-aqueous electrolyte according to claim 5, wherein Additive A accounts for 0.1% to 1% of the total mass of the non-aqueous electrolyte.

7. The non-aqueous electrolyte according to claim 1, wherein the boron-containing lithium salt comprises one or more of lithium difluoro(oxalato)borate, lithium tetrafluoroborate, lithium bis(oxalato)borate, lithium tetraborate, lithium triphenyl-n-butylborate, and lithium trimethylimidazolium tetrafluoroborate.

8. The non-aqueous electrolyte according to claim 1 or 7, wherein Additive B accounts for 0.01% to 2% of the total mass of the non-aqueous electrolyte.

9. The non-aqueous electrolyte according to claim 8, wherein Additive B accounts for 0.1% to 1% of the total mass of the non-aqueous electrolyte.

10. The non-aqueous electrolyte according to claim 1, wherein the additive further comprises other additives, the other additives being one or more of vinylene carbonate, vinyl ethylene carbonate, tris(trimethylsilyl) borate, tris(trimethylsilyl) phosphate, citraconic anhydride, succinic anhydride, biphenyl, cyclohexylbenzene, trioctyl phosphate, fluoroethylene carbonate, succinonitrile, adiponitrile, 1,3,6-hexanetricarbonitrile, 1,2-bis(2-cyanoethoxy)ethane, 1,4-dicyano-2-butene, 1,2,3-tris(2-cyanoethoxy)propane, and sebaconitrile.

11. The non-aqueous electrolyte according to claim 10, wherein the other additives account for 2% to 15% of the total mass of the non-aqueous electrolyte.

12. The non-aqueous electrolyte according to claim 11, wherein the other additives account for 2% to 13% of the total mass of the non-aqueous electrolyte.

13. The non-aqueous electrolyte according to claim 1, wherein the organic solvent is a mixture of cyclic esters and chain esters, the cyclic ester being one or more of γ-butyrolactone, ethylene carbonate, propylene carbonate, and fluoroethylene carbonate; the chain ester being one or more of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, ethyl fluoropropionate, and ethyl fluoroacetate.

14. The non-aqueous electrolyte according to claim 1, wherein the lithium salt is one or more of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalato)phosphate, lithium difluorophosphate, lithium trifluoromethanesulfonate, lithium difluorobis(oxalato)phosphate, lithium difluorobis(oxalato)phosphate, lithium fluorosulfonate, lithium monoxalatodifluoroborate, and lithium bis(fluorosulfonyl)imide; and/or,
the concentration of the lithium salt is 0.8 to 1.5 mol/L.

15. A lithium-ion battery, wherein the lithium-ion battery comprises the non-aqueous electrolyte according to any one of claims 1 to 14.

16. The lithium-ion battery according to claim 15, wherein the lithium-ion battery is a lithium cobaltate-graphite battery or a lithium cobaltate-silicon oxycarbon battery.
